# FASCICULE DE BREVET EUROPEEN

(11) **EP 0 768 162 B1**
(45) Date de publication et mention de la délivrance du brevet: **04.12.2002**
(21) Numéro de dépôt: 96402146.3
(22) Date de dépôt: 10.10.1996
(51) Int. Cl.: B29C 45/14

(54) **Procédé de fabrication d'un vitrage pourvu d'un cadre profilé en élastomère**
Verfahren zur Herstellung einer Glasscheibe mit einem Profilrahmen aus Elastomer
Method for producing a glazing comprising an elastomeric profile frame

(30) Priorité: 10.10.1995 DE 19537693
(43) Date de publication de la demande: 16.04.1997
(73) Titulaire: SAINT-GOBAIN GLASS FRANCE, 92400 Courbevoie (FR)
(72) Inventeur: Cornils, Gerd, 52399 Merzenich-Golzheim (DE); Fisher, Florian, 52070 Aachen (DE); Kotte, Rolf, Dr., 52477 Alsdorf-Begau (DE)
(74) Mandataire: Muller, René

(56) Documents cités:
- EP-A- 0 620 134
- DE-C- 4 123 256
- DE-C- 19 537 693
- FR-A- 2 247 341
- FR-A- 2 624 191

## Description

La présente invention concerne un procédé de fabrication d'un vitrage pourvu d'un cadre profilé en un élastomère thermoplastique, procédé dans lequel un cadre profilé présentant une section profilée en forme de canal pourvue d'affouillements et/ou de saillies d'ancrage, est extrudé sur le vitrage et le cadre profilé extrudé est postformé et/ou complété dans au moins une zone déterminée, à l'aide d'un procédé de moulage par injection.

Un procédé d'extrusion d'un cadre profilé en un élastomère thermoplastique, comportant un profilé en forme de canal pourvu de saillies d'ancrage, est connu par le document EP-0 620 134 A2. Avant le montage, la masse de colle est introduite à l'aide d'une buse d'injection dans le canal pourvu des saillies d'ancrage. Pour le cadre profilé et pour la masse de colle, on choisit des matières qui ne forment aucune liaison adhésive entre elles, de sorte que l'assemblage du cadre profilé au rebord de collage du cadre de fenêtre est fourni par l'engagement mécanique avec épousement de forme entre le cadre profilé et la masse de colle durcie qui adhère au rebord de collage du cadre de fenêtre. Une telle construction de fenêtre présente l'avantage que le vitrage peut, en cas de besoin, être retiré relativement facilement du cadre de fenêtre et peut être réutilisé en vue d'un nouveau montage. Dans ce cas, il est uniquement nécessaire de séparer le cordon de colle durci du rebord de collage et de remplir le canal du cadre profilé sur le vitrage d'une nouvelle masse de colle.

Lors de l'extrusion d'un cadre sur un vitrage, la zone de raccord entre le début et la fin du cordon profilé extrudé doit être postmoulée. Lorsque le cordon profilé est constitué d'un polymère thermoplastique, le postmoulage peut être réalisé à l'aide d'outils de compression. Mais il est également possible d'effectuer le postmoulage de la zone de raccord à l'aide d'un procédé de moulage par injection. Cela est toujours nécessaire dans la zone à postmouler lorsque trop peu de matière a été déposée à cet endroit lors de l'opération d'extrusion ou lorsqu'une partie du cadre profilé est découpée après solidification dans la zone à postmouler et que le cadre profilé est ensuite complété.

Il est aussi nécessaire de compléter le cadre profilé au moyen d'un processus de moulage par injection lorsque les vitrages comportent un ou plusieurs coins à angle vif. Dans le cas de vitrages comportant des angles vifs, il est notamment recommandé, dans la zone des angles vifs, d'extruder le cordon profilé du cadre profilé sur le vitrage selon un trajet courbe en évitant la zone d'angle proprement dite. En effet, d'une part, il est extraordinairement difficile de former par extrusion dans un angle vif un cadre profilé présentant une section transversale de profilé correcte. D'autre part, le fait de remplir ultérieurement le canal avec la masse de colle dans la zone d'angle suscite également des difficultés, lorsque le canal s'étend à cet endroit selon un angle droit ou aigu. Des difficultés particulières se présentent ainsi lorsque l'introduction de la masse de colle dans le canal est effectuée à l'aide d'un robot. Du fait des raisons citées, le cordon profilé est déposé dans la zone d'angle vif selon un trajet courbe en évitant la zone de coin proprement dite.

Il est connu par le document EP-0 524 060 A1, dans le cas d'un vitrage comportant des angles vifs, d'extruder dans la zone d'angle ou de coin le cadre profilé selon une courbe de la manière décrite et de compléter la zone de coin proprement dite par injection d'un polymère constitué d'un système à réaction. L'application de ce procédé selon le préambule de la revendication indépendante connu par le document EP-0 524 060 A1 pour des vitrages qui sont pourvus d'un cadre profilé en un polymère thermoplastique et qui présentent un canal pour la réception de la colle se heurte cependant à des difficultés considérables. Lorsque le cadre profilé est constitué par exemple d'un polymère thermoplastique, on complète le cadre dans la zone de coin proprement dite avec le même polymère thermoplastique que celui dont est constitué le cadre profilé. Cela signifie alors que la zone de coin du vitrage est entourée d'un moule d'injection, dans lequel le polymère à postinjecter, présentant une température supérieure à la température de fusion du cadre profilé, est introduit sous une pression élevée. Dans ces conditions, comme cela s'est avéré, le segment adjacent du profilé en forme de canal est déformé. Cette déformation peut être telle que le canal soit fortement rétréci ou même complètement fermé, de sorte que la masse de colle ne peut plus être introduite dans le canal. Des difficultés semblables surgissent également lorsqu'un postformage à l'aide du procédé de moulage par injection doit être effectué en un autre endroit du cadre profilé, par exemple dans la zone de raccord entre le début et la fin du cordon profilé.

L'invention a pour but d'améliorer ce procédé de telle sorte que l'on puisse postformer et compléter le cadre profilé extrudé sans altération gênante du profilé extrudé.

Ce but est atteint conformément au procédé de fabrication selon la revendication indépendante 1.

Le soutien mécanique des parois intérieures du canal peut être obtenu par le fait qu'un noyau de forme correspondante est introduit, avant la mise en place du vitrage dans le moule d'injection ou avant l'installation du moule d'injection sur le vitrage, dans le canal du cadre profilé, dans la zone comprise dans le moule à injection. Ce noyau est retiré du canal après l'enlèvement du moule d'injection.

Au lieu de cela, il est également possible de monter un noyau de forme correspondant à la section transversale du canal directement sur le demi-moule supérieur du moule d'injection. Lors de la séparation du demi-moule supérieur, la matière du cadre profilé se relâche élastiquement, de sorte que, malgré l'imbrication du noyau dans le profilé, le demi-moule supérieur peut être enlevé du vitrage avec le noyau, sans que le profilé ne soit endommagé. Par ailleurs, il est aussi possible de façonner le noyau de façon telle qu'il ne remplisse pas tout le creux du canal, mais qu'il ne soutienne qu'une aile du cadre profilé, et de le concevoir de manière qu'il soit mobile de telle sorte qu'il puisse être déplacé, après l'exécution de l'opération de postinjection, au milieu du canal, d'où l'on peut le séparer sans difficulté du cadre profilé, conjointement avec le demi-moule supérieur.

Des configurations et des améliorations avantageuses de l'invention découlent des sous-revendications et de la description suivante.

Le procédé conforme à l'invention trouve une utilisation préférée dans l'extrusion d'un cadre profilé sur un vitrage comportant des angles vifs. C'est pourquoi, l'invention sera décrite dans la description suivante sur la base d'exemples d'exécution, qui ont pour objet la fabrication d'un vitrage pourvu d'un cadre profilé extrudé avec au moins un angle vif.

Dans les dessins annexés :
**la Fig. 1** montre la zone de coin d'un vitrage présentant un angle vif et un cadre profilé après l'exécution de l'opération d'extrusion ;
**la Fig. 2** montre la zone de coin représentée sur la Fig. 1 après achèvement de la lèvre de la façon conforme à l'invention ;
**la Fig. 3** est une vue du dessus de la zone de coin d'un vitrage selon la Fig. 1 avant l'achèvement de la lèvre par postinjection, un noyau étant logé dans le canal du cadre profilé ;
**la Fig. 4** est une vue en coupe selon la ligne IV-IV de la Fig. 3 avec le noyau amovible logé dans le profilé, pendant l'opération de postinjection dans un moule d'injection, et
**la Fig. 5** est une vue en coupe d'un moule d'injection avec un noyau disposé sur le demi-moule supérieur, également de façon analogue selon la ligne IV-IV de la Fig. 3.

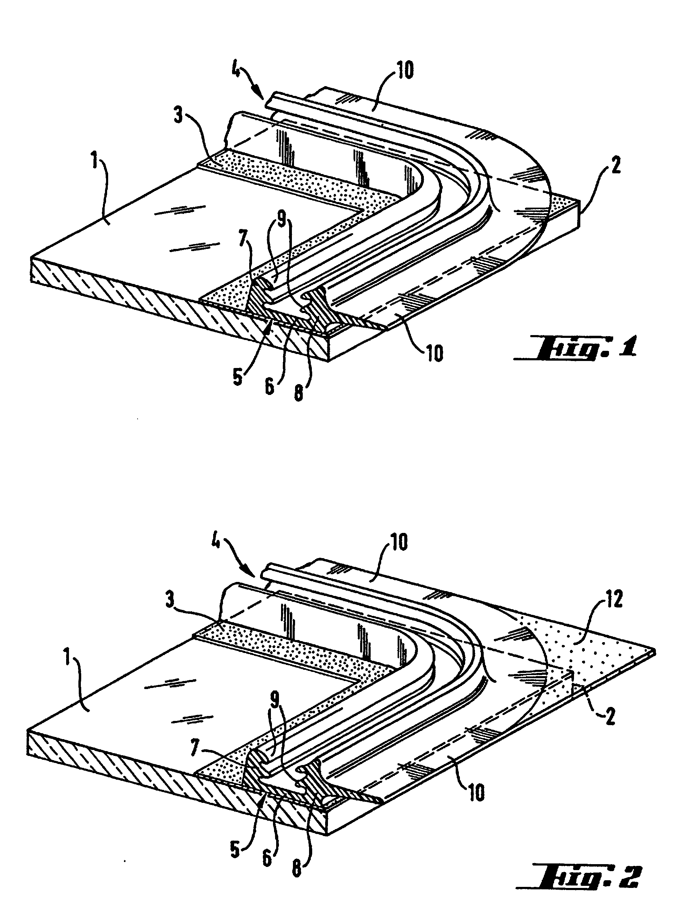

Sur la Fig. 1 est représentée la zone de coin d'un vitrage 1 présentant un angle vif 2, en l'occurrence un angle d'une valeur de 90°. Certains vitrages automobiles sont parfois configurés de manière à présenter un tel angle vif, alors que leur contour pour le reste décrit des courbes présentant un rayon plus ou moins grand. De telles formes de vitrage se présentent souvent dans des vitrages latéraux arrière fixes. Des vitrages comportant deux angles vifs sont souvent utilisés pour les lunettes arrière d'automobiles; dans ce cas, les deux coins inférieurs ont habituellement la forme d'angles vifs, tandis que les deux coins supérieurs sont plus ou moins fortement arrondis. Dans d'autres cas, en particulier dans le bâtiment, des vitrages rectangulaires, dont les quatre coins sont des angles droits, sont utilises. Dans tous ces cas, le procédé conforme à l'invention peut être utilisé.

Sur le vitrage 1 est tout d'abord appliquée, dans la zone marginale, une couche 3 en forme de cadre en une matière opaque, en règle générale en un émail cuit à chaud, qui fond et est cuit dans la surface du verre lors du traitement thermique auquel sont soumis les vitrages en vue du bombage et/ou de la trempe. Le cadre profilé 4 est ensuite extrudé sur cette couche 3 sur le vitrage au niveau de la zone marginale du vitrage 1. Le cadre profilé 4 présente, en coupe transversale, une section profilée 5 en forme de canal, qui est formée par la partie inférieure 6, l'aile intérieure 7 et l'aile extérieure 8. Les ailes 7 et 8 sont pourvues sur leur face intérieure de dents ou nervures 9 qui forment des saillies d'ancrage pour la masse de colle, qui est introduite dans le canal 5. Le cadre profilé présente, en outre, la lèvre 10 faisant saillie vers l'extérieur, qui s'étend au-delà du bord du vitrage, vers l'extérieur.

Un cadre profilé présentant la section transversale de profilé représentée ne peut pas être façonné avec un angle vif dans la zone de coin à l'aide du procédé d'extrusion connu, de sorte que le cordon profilé extrudé doit être déposé sur le vitrage dans le coin selon une courbe présentant un rayon plus ou moins grand. Au tracé courbe ainsi forcément obtenu de la lèvre 10 dans la zone d'angle s'ajoute le fait que, dans le cas d'un petit rayon, la partie de lèvre du profilé dans la filière d'extrusion n'est souvent pas assez alimentée en polymère, de sorte que la lèvre est souvent plus courte à cet endroit que sur les parties de profilé rectilignes. Pour ces raisons, il est connu de compléter la lèvre 10 dans la zone de coin par une opération de postinjection. Il est aussi nécessaire de compléter ainsi la lèvre, parce qu'elle est visible de l'extérieur du vitrage. Le coin 12 est moulé par injection sur la lèvre 10 dans la zone de coin proprement dite par cette opération de postinjection. Lorsque le même élastomère thermoplastique est utilisé pour le moulage par injection du coin 12 et du profilé 4, les zones de jonction de la partie de coin 12 à la lèvre 10 ne sont en règle générale pas visibles.

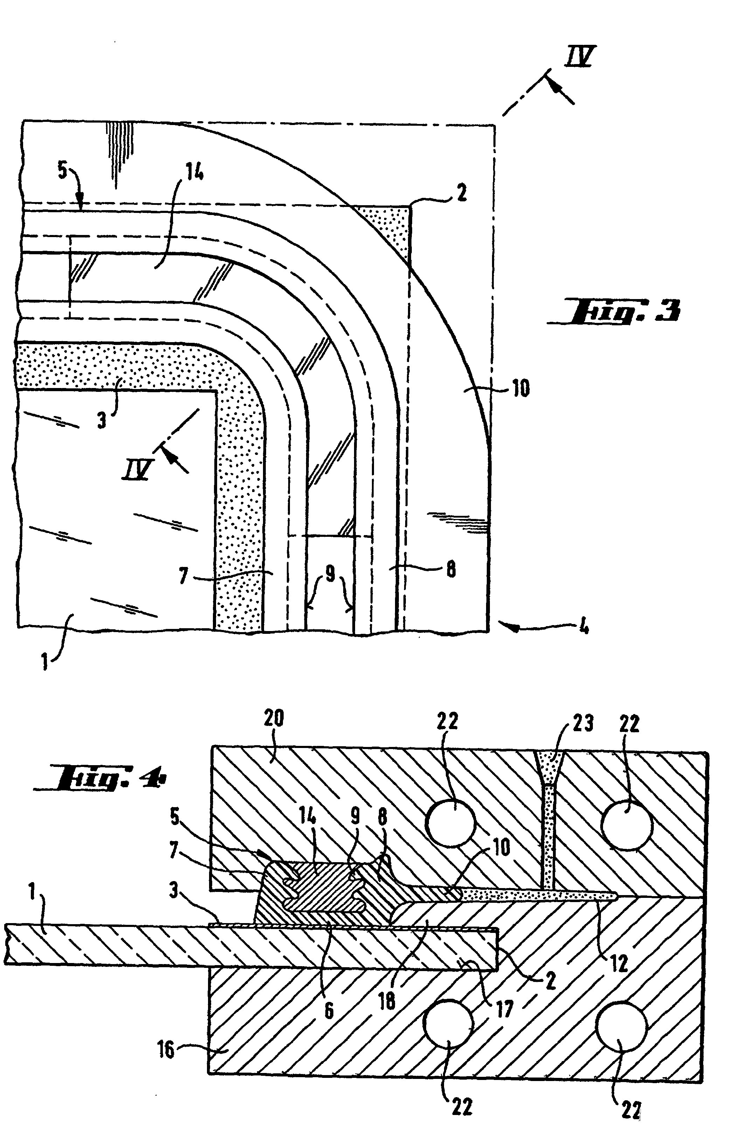

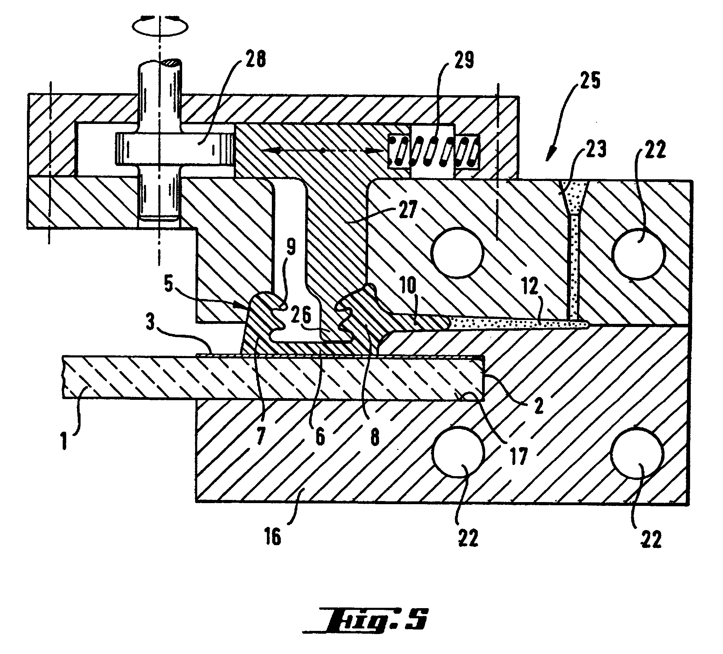

Conformément à la forme d'exécution représentée sur les Fig. 3 et 4 du procédé de postinjection selon l'invention, un noyau 14, dont la section transversale correspond à la section transversale du canal 5, est inséré dans le canal 5 du cadre profilé dans la zone du coin. Le noyau 14 doit être constitué d'une matière qui, à la température qu'atteint le noyau lors de l'opération de postinjection, ne se ramollisse pas, ne fonde pas ou ne forme pas de liaison adhésive avec le profilé en forme de cadre, avec pour résultat qu'il peut être facilement retiré du canal après l'opération de postinjection. Par exemple, le noyau 14 peut être fait de métal ou d'un polymère dur. Il peut cependant être également constitué d'un polymère souple élastique, ce qui présente l'avantage qu'il peut s'adapter à des rayons différents du profilé en forme de cadre.

Pour l'exécution de l'opération de postinjection, le vitrage 1 comportant la zone de coin pourvue du noyau 14 est introduit dans un moule d'injection, qui comprend un demi-moule inférieur 16 et un demi-moule supérieur 20. Dans le cas de ce moule d'injection 16, 20, il s'agit de préférence d'un moule présentant des dimensions de surface relativement petites, qui ne sont sensiblement pas plus grandes que les dimensions de surface de la zone de coin à postformer. Comme cela ressort de la Fig. 4, le demi-moule inférieur 16 présente un évidement, dans lequel le coin 2 du vitrage est introduit. La partie de moule 18 se trouvant au-dessus de l'évidement 17 forme la surface de moulage pour la partie de lèvre à postinjecter. Le demi-moule supérieur 20 est également conformé en fonction de la forme souhaitée de la lèvre. Au-dessus du noyau 14, la surface de moulage est façonnée de telle sorte qu'elle assure l'obturation avec la surface du noyau 14. Le demi-moule supérieur 20 et le demi-moule inférieur 16 sont pourvus de dispositifs chauffants 22 appropriés. Le demi-moule supérieur 20 présente une lumière d'injection 23 sur laquelle est ajustée une buse d'injection, au moyen de laquelle l'élastomère fondu est introduit sous pression dans le moule.

Dans le cas du moule d'injection représenté sur la Fig. 5, le demi-moule inférieur 16 est construit exactement comme il a été décrit à propos de la Fig. 4. Le demi-moule supérieur 25 est par contre pourvu d'un noyau 26 intégré dans ce demi-moule supérieur. Le noyau 26 est dans ce cas conçu en tant que noyau partiel, qui sert uniquement à fixer la forme de l'aile extérieure 8, puisque la pression de matière lors du moulage par injection s'exerce principalement sur cette aile extérieure 8. Le noyau proprement dit 26 forme le segment d'extrémité inférieur d'une partie de moule 27 se déplaçant dans la direction de la bissectrice de l'angle vif. Le déplacement de cette partie de moule 27 dans sa position de travail s'effectue, dans le cas représenté, à l'aide d'un excentrique 28, qui peut être tourné sur un angle de 180 degrés à l'aide d'un entraînement rotatif approprié, non représenté. Le déplacement de la partie de moule 27 dans l'autre position extrême s'effectue lors d'une rotation correspondante de l'excentrique 28 sous l'action de la force élastique du ressort hélicoïdal 29. Tandis que le noyau 26 se trouve dans la position extrême représentée tout contre l'aile extérieure 8 et assure la fixation de la forme lors de la postinjection, il peut dans son autre position extrême pénétrer sans problème dans le canal lors de l'abaissement du demi-moule supérieur 25 et être retiré du canal 5 lors de la séparation du demi-moule supérieur 25.

## Revendications

1. Procédé de fabrication d'un vitrage (1) pourvu d'un cadre profilé (4) en un élastomère thermoplastique, dans lequel un cadre profilé (4) présentant une section profilée (5) en forme de canal, pourvue d'aile intérieure (7) et d'aile extérieure (8), est extrudé sur le vitrage, et le cadre profilé (4) extrudé est postmoulé et/ou complété dans au moins une zone déterminée, à l'aide d'un procédé de moulage par injection, **caractérisé en ce que** la section profilée en forme de canal est pourvue d'affouillements et/ou de saillies d'ancrage (9) et **en ce que** le procédé comprend au moins les étapes suivantes :
- on introduit entre les parois intérieures des ailes (7, 8) du canal de la zone déterminée un noyau (14, 26) présentant une section transversale, correspondant au contour intérieur d'au moins une partie du canal ;
- on postmoule et/ou complète le cadre profilé (4) à l'aide du procédé de moulage par injection dans la zone déterminée pendant que le noyau (14, 26) soutient au moins partiellement les parois intérieures des ailes (7, 8) du canal dans la zone déterminée.

2. Procédé suivant la revendication 1, **caractérisé en ce que,** avant de mettre en oeuvre le procédé de moulage par injection, on introduit à l'intérieur de la zone déterminée, dans le canal du cadre profilé (4), un noyau (14) qui est retiré du canal après l'enlèvement du moule d'injection.

3. Procédé suivant la revendication 2, **caractérisé en ce qu'**on utilise un noyau (14) en une matière dure qui ne se déforme pas à la température et sous la pression de l'opération de postinjection.

4. Procédé suivant la revendication 3, **caractérisé en ce qu'on** utilise un noyau (14) en une matière qui permettre une adaptation du noyau au tracé du canal.

5. Procédé suivant la revendication 1, **caractérisé en ce qu'on** utilise pour l'exécution du procédé de moulage par injection (25, 16) un moule d'injection comportant un noyau intégré (26).

6. Procédé suivant la revendication 5, **caractérisé en ce qu**'on utilise un moule d'injection (25,16) comportant un noyau intégré (26) qui est conçu en tant que noyau partiel pour le soutien de la paroi intérieure d'une aile du profilé (7, 8) en forme de canal et qui peut être déplacé dans une position de travail assurant le soutien et une position de repos facilitant l'introduction dans le canal et son enlèvement du canal.

7. Utilisation du procédé suivant l'une quelconque des revendications 1 à 6 pour postmouler la zone de raccord entre le début et la fin du cadre profilé extrudé (4).

8. Utilisation du procédé suivant l'une quelconque des revendications 1 à 6 pour compléter le cadre profilé (4) dans la zone d'un angle vif du vitrage (2).

## Patentansprüche

1. Verfahren zum Herstellen einer mit einem Profilrahmen (4) aus einem thermoplastischen Elastomer versehenen Glasscheibe (1), bei dem ein einen kanalartigen, mit innerem Steg (7) und äußerem Steg (8) versehenen Profilabschnitt (5) aufweisender Profilrahmen (4) an die Glasscheibe anextrudiert, und der anextrudierte Profilrahmen (4) in wenigstens einem ausgewählten Bereich mit Hilfe eines Spritzgießverfahrens nachgeformt und/oder vervollständigt wird, **dadurch gekennzeichnet, dass** der kanalartige Profilabschnitt mit Hinterschneidungen und/oder Verankerungsvorsprüngen (9) versehen ist und dass das Verfahren zumindest die folgenden Schritte umfasst
- zwischen die Innenwände der Stege (7, 8) des Kanals im ausgewählten Bereich wird ein Kern (14, 26) mit einem Querschnitt eingeführt, welcher der Innenkontur zumindest eines Teilbereichs des Kanals entspricht;
- der Profilrahmen wird mit Hilfe des Spritzgießverfahrens in dem ausgewählten Bereich nachgeformt und/oder vervollständigt, wobei die Innenwände der Stege (7, 8) des Kanals im ausgewählten Bereich wenigstens teilweise von dem Kern (14, 26) abgestützt werden.

2. Verfahren nach Anspruch 1, **dadurch gekennzeichnet, dass** vor der Anwendung des Spritzgießverfahrens innerhalb des ausgewählten Bereichs in den Kanal des Profilrahmens (4) ein Kern (14) eingelegt wird, der nach der Entfernung der Spritzgießform wieder aus dem Kanal entfernt wird.

3. Verfahren nach Anspruch 2, **dadurch gekennzeichnet, dass** ein Kern (14) aus einem harten, bei der Temperatur und dem Druck des Nachspritzvorgangs sich nicht deformierenden Material verwendet wird.

4. Verfahren nach Anspruch 3, **dadurch gekennzeichnet, dass** ein Kern (14) aus einem Material verwendet wird, das eine Anpassung des Kerns an den Verlauf des Kanals gestattet.

5. Verfahren nach Anspruch 1, **dadurch gekennzeichnet, dass** zur Durchführung des Spritzgießverfahrens eine Spritzgießform (25,16) mit integriertem Kern (26) verwendet wird.

6. Verfahren nach Anspruch 5, **dadurch gekennzeichnet, dass** eine Spritzgießform (25, 16) mit integriertem Kern (26) verwendet wird, der als partieller Kem zum Abstützen eines Stegs (7, 8) des kanalartigen Profilabschnitts ausgebildet und in eine die Abstützung bewirkende Arbeitsstellung und eine die Einführung in den Kanal und seine Entfernung aus dem Kanal erleichternde Ruhestellung verschiebbar ist.

7. Anwendung des Verfahren nach einem der Ansprüche 1 bis 6 zum Nachformen des Übergangsbereichs zwischen Anfang und Ende des anextrudierten Profilrahmens (4).

8. Anwendung des Verfahrens nach einem der Ansprüche 1 bis 6 zum Vervollständigen des Profilrahmens (4) im Bereich einer spitzen Ecke (2) der Glasscheibe.

## Claims

1. Method of manufacturing a window (1) provided with a profiled frame (4) made from a thermoplastic elastomer, in which a profiled frame (4) having a profiled section (5) in the form of a channel, provided with an inner flange (7) and an outer flange (8), is extruded on the window, and the extruded profiled frame (4) is postmoulded and/or completed in at least one given zone, by means of an injection moulding process, **characterised in that** the profiled section in the form of a channel is provided with scoring and/or anchoring projections (9) and **in that** the method comprises at least the following steps:
- a core (14, 26) having a transverse section corresponding to the internal contour of at least part of the channel is introduced between the inner walls of the flanges (7, 8) of the channel of the given zone;
- the profiled frame (4) is postmoulded and/or completed by means of the injection moulding process in the given zone whilst the core (14, 26) at least partially supports the inner walls of the flanges (7, 8) of the channel in the given zone.

2. Method according to Claim 1, **characterised in that**, before implementing the injection moulding process, there is introduced inside the given zone, in the channel of the profiled frame (4), a core (14) which is withdrawn from the channel after removal of the injection mould.

3. Method according to Claim 2, **characterised in that** use is made of a core (14) made from a hard material which does not deform at the temperature and pressure of the postinjection operation.

4. Method according to Claim 3, **characterised in that** use is made of a core (14) made from a material which allows an adaptation of the core to the outline of the channel.

5. Method according to Claim 1, **characterised in that**, for executing the injection moulding process (25, 16), an injection mould having an integral core (26) is used.

6. Method according to Claim 5, **characterised in that** use is made of an injection mould (25, 16) having an integral core (26) which is designed as a partial core for supporting the inner wall of a flange of the profiled member (7, 8) in the form of a channel and which can be moved in a working position providing the support and an idle position facilitating the introduction into the channel and its removal from the channel.

7. Use of the method according to any one of Claims 1 to 6 for postmoulding the connection zone between the start and end of the extruded profiled frame (4).

8. Use of the method according to any one of Claims 1 to 6 for completing the profiled frame (4) in the area of a sharp corner of the window (2).
